# EUROPEAN PATENT APPLICATION

(11) **EP 4 836 019 A1**
(43) Date of publication of application: **04.11.2026**
(21) Application number: 24911895.1
(22) Date of filing: 27.09.2024
(51) Int. Cl.: H01M 4/62, H01M 4/13, H01M 4/139

(54) **ELECTRODE BINDER POLYMER FOR NONAQUEOUS SECONDARY BATTERY, ELECTRODE BINDER COMPOSITION FOR NONAQUEOUS SECONDARY BATTERY, ELECTRODE SLURRY FOR NONAQUEOUS SECONDARY BATTERY, ELECTRODE FOR NONAQUEOUS SECONDARY BATTERY, NONAQUEOUS SECONDARY BATTERY, METHOD FOR PRODUCING ELECTRODE BINDER POLYMER FOR NONAQUEOUS SECONDARY BATTERY, METHOD FOR PRODUCING ELECTRODE BINDER COMPOSITION FOR NONAQUEOUS SECONDARY BATTERY, METHOD FOR PRODUCING ELECTRODE SLURRY FOR NONAQUEOUS SECONDARY BATTERY, AND METHOD FOR PRODUCING ELECTRODE FOR NONAQUEOUS SECONDARY BATTERY**

(30) Priority: 28.12.2023 JP 2023223502
(71) Applicant: Resonac Corporation, Tokyo 105-7325 (JP)
(72) Inventor: FUKASE, Kazunari, Tokyo 105-7325 (JP); IIZUKA, Tatsuya, Tokyo 105-7325 (JP); NAKAYAMA, Keito, Tokyo 105-7325 (JP); OGA, Kazuhiko, Tokyo 105-7325 (JP); HIRAKAWA, Teruo, Tokyo 105-7325 (JP)
(74) Representative: Berggren Oy
(86) International application number: PCT/JP2024/034819
(87) International publication number: WO 2025/142001

(57) **Abstract**

An electrode binder polymer for a non-aqueous secondary battery includes a first structural unit "-CH₂CR¹(CONR²R³)-" in an amount of from 12% by mol to 68% by mol, a second structural unit "-CH₂CR⁴(COOX)-" in an amount of from 12% by mol to 87% by mol, and a third structural unit "-CH₂CR⁵(C≡N)-" in an amount of from 1.0% by mol to 60% by mol.

## Description

### Technical Field

The present disclosure relates to an electrode binder polymer for a non-aqueous secondary battery, an electrode binder composition for a non-aqueous secondary battery, an electrode slurry for a non-aqueous secondary battery, an electrode for a non-aqueous secondary battery, a non-aqueous secondary battery, a method of producing an electrode binder polymer for a non-aqueous secondary battery, a method of producing an electrode binder composition for a non-aqueous secondary battery, a method of producing an electrode slurry for a non-aqueous secondary battery, and a method of producing an electrode for a non-aqueous secondary battery.

### Background Art

Secondary batteries using a non-aqueous electrolyte (non-aqueous secondary batteries) are superior to secondary batteries using an aqueous electrolyte in terms of achieving high voltage, miniaturization, weight reduction, and the like. Therefore, non-aqueous secondary batteries are widely used as power sources for notebook computers, mobile phones, electric tools, electronic devices, communication devices, and the like. Furthermore, recently, non-aqueous batteries have also been used for electric vehicles and hybrid vehicles from the viewpoint of application to environment-friendly vehicles. Among such circumstances, there is a strong demand for non-aqueous secondary batteries to achieve higher output, higher capacity, and longer service life.

As a non-aqueous secondary battery, a lithium-ion secondary battery is mentioned as a representative example. A non-aqueous secondary battery includes a positive electrode using a metal oxide or the like as an active material, a negative electrode using a carbon material such as graphite as an active material, and a non-aqueous electrolyte solvent typified by carbonates or flame-retardant ionic liquids. A non-aqueous secondary battery is a secondary battery in which the battery is charged and discharged by ions moving between the positive electrode and the negative electrode. The positive electrode is obtained by applying a slurry containing a metal oxide and a binder onto a surface of a positive electrode current collector such as an aluminum foil, drying thereof, and then cutting it into an appropriate size. The negative electrode is obtained by applying a slurry containing a carbon material and a binder onto a surface of a negative electrode current collector such as a copper foil, drying thereof, and then cutting it into an appropriate size. The binder has a role of binding active materials to each other and a role of binding the active material and the current collector, and can prevent the active material from peeling off from the current collector in the positive electrode and the negative electrode.

As a binder, a polyvinylidene fluoride (PVDF)-typed binder using organic solvent-based N-methylpyrrolidone (NMP) as a solvent is well known. However, in a case in which this binder is used, there are problems in that the binding property between active materials is low and the binding property between the active material and the current collector is low. Therefore, when this binder is actually used, it is necessary to use it in a large amount, which has a disadvantage of reducing the capacity of the non-aqueous secondary battery. In addition, in this case, since NMP, which is an expensive organic solvent, is used, it is difficult to suppress the manufacturing cost.

In order to solve such a problem, for example, Patent Document 1 discloses that a copolymer of a monomer mixture containing a monomer having an amide bond such as N-vinylacrylamide and a (meth)acrylate monomer is used as a copolymer for a binder for a non-aqueous battery electrode.

Further, Patent Document 2 describes a copolymer of acrylamide, acrylonitrile, and acrylic acid or a salt thereof as a polymer component contained in a negative electrode of a secondary battery.

### [Prior Art Documents]

### [Patent Documents]

Patent Document 1: International Publication No. WO 2017/150200
Patent Document 2: International Publication No. WO 2021/060737

### SUMMARY OF INVENTION

### Technical Problem

By the way, in a non-aqueous secondary battery, the appearance quality of an electrode is an important factor for sufficiently exerting performance, and it is required to suppress the occurrence of streaks, aggregates, and the like. Further, in a non-aqueous secondary battery, the electrode is in a state of being immersed in an electrolytic solution, and even under such an environment, it is required to maintain high peel strength of the electrode active material layer. Furthermore, in a non-aqueous secondary battery, it is required to use an electrode for a non-aqueous secondary battery that is excellent in appearance and excellent in peel strength of the electrode active material layer, and to improve the discharge capacity retention rate in a charge-discharge cycle.

Accordingly, an object of the present disclosure is to provide an electrode binder polymer for a non-aqueous secondary battery, which is capable of forming an electrode for a non-aqueous secondary battery that is excellent in appearance and excellent in peel strength of an electrode active material layer, and which is capable of producing a non-aqueous secondary battery in which the discharge capacity retention rate in a charge-discharge cycle is improved. Further, an object of the present disclosure is to provide an electrode for a non-aqueous secondary battery, which is excellent in appearance and excellent in peel strength of an electrode active material layer. Furthermore, an object of the present disclosure is to provide a non-aqueous secondary battery having an electrode for a non-aqueous secondary battery, which is excellent in appearance and excellent in peel strength of an electrode active material layer, and in which the discharge capacity retention rate in a charge-discharge cycle is improved.

Furthermore, an object of the present disclosure is to provide an electrode binder composition for a non-aqueous secondary battery and an electrode slurry for a non-aqueous secondary battery, which contain the electrode binder polymer for a non-aqueous secondary battery.

Moreover, it is an object to provide methods of producing the electrode binder polymer for a non-aqueous secondary battery, the electrode binder composition for a non-aqueous secondary battery, the electrode slurry for a non-aqueous secondary battery, and the electrode for a non-aqueous secondary battery, respectively.

### Solution to Problem

The present disclosure includes the following aspects.
<1> An electrode binder polymer for a non-aqueous secondary battery, including:
   a first structural unit represented by the following Formula (1) in an amount of from 12% by mol to 68% by mol;
   a second structural unit represented by the following Formula (2) in an amount of from 12% by mol to 87% by mol; and
   a third structural unit represented by the following Formula (3) in an amount of from 1.0% by mol to 60% by mol:

      Formula (1): -CH₂CR¹(CONR²R³)-
   in which, in Formula (1), R¹ is a hydrogen atom or an alkyl group; R² has a hydroxy group, and has a structure containing two or more carbon atoms between the nitrogen atom to which R² and R³ are bonded and the hydroxy group contained in R²; R³ is a hydrogen atom, a hydrocarbon group, or a structure in which at least one of hydrogen atoms of a hydrocarbon group is substituted with a hydroxy group, or a structure having a hydroxy group and containing two or more carbon atoms between the nitrogen atom to which R² and R³ are bonded and the hydroxy group contained in R³:

      Formula (2): -CH₂CR⁴(COOX)-
   in which, in Formula (2), R⁴ is a hydrogen atom or an alkyl group; and COOX is at least one selected from the group consisting of a carboxy group and salts thereof: and

      Formula (3): -CH₂CR⁵(C≡N)-
   in which, in Formula (3), R⁵ is a hydrogen atom, an alkyl group, or an alkoxy group.
<2> The electrode binder polymer for a non-aqueous secondary battery according to <1>, in which a solubility in water at 25°C is 5.0 g/100 gH₂O or more.
<3> The electrode binder polymer for a non-aqueous secondary battery according to <1> or <2>, in which a total content of the first structural unit, the second structural unit, and the third structural unit is 80% by mol or more.
<4> The electrode binder polymer for a non-aqueous secondary battery according to any one of <1> to <3>, in which R² is a structure represented by R²¹-OH, and R²¹ is a hydrocarbon group or a structure in which at least one of hydrogen atoms of a hydrocarbon group is substituted with a hydroxy group.
<5> The electrode binder polymer for a non-aqueous secondary battery according to any one of <1> to <4>, in which, in the second structural unit, a content of a structural unit in which COOX in the formula is a sodium salt of a carboxy group is 20% by mol or more.
<6> The electrode binder polymer for a non-aqueous secondary battery according to any one of <1> to <5>, in which a content of the second structural unit is 70% by mol or less.
<7> The electrode binder polymer for a non-aqueous secondary battery according to any one of <1> to <6>, in which a weight average molecular weight is from 1,500,000 to 10,000,000.
<8> The electrode binder polymer for a non-aqueous secondary battery according to any one of <1> to <7>, further including a fourth structural unit represented by the following Formula (4):

   Formula (4): -CH₂CR⁶(NR⁷COR⁸)-

   in which, in Formula (4), R⁶ is a hydrogen atom or an alkyl group, R⁷ is a hydrogen atom or a hydrocarbon group, and R⁸ is a hydrogen atom or a hydrocarbon group.
<9> An electrode binder composition for a non-aqueous secondary battery, including:
   the electrode binder polymer for a non-aqueous secondary battery according to any one of <1> to <8>; and
   an aqueous medium.
<10> The electrode binder composition for a non-aqueous secondary battery according to <9>, in which the electrode binder polymer for a non-aqueous secondary battery is entirely dissolved in the aqueous medium at 25°C.
<11> An electrode slurry for a non-aqueous secondary battery, including:
   the electrode binder polymer for a non-aqueous secondary battery according to any one of <1> to <8>;
   an electrode active material; and
   an aqueous medium.
<12> An electrode for a non-aqueous secondary battery, including:
   a current collector; and
   an electrode active material layer provided on or above at least a part of a region on a surface of the current collector and including an electrode active material and the electrode binder polymer for a non-aqueous secondary battery according to any one of <1> to <8>.
<13> A non-aqueous secondary battery including the electrode for a non-aqueous secondary battery according to <12>.
<14> A method of producing the electrode binder polymer for a non-aqueous secondary battery according to any one of <1> to <8>, the method including:
   performing radical polymerization in an aqueous medium using N-hydroxyethyl (meth)acrylamide or N-hydroxypropyl (meth)acrylamide as a compound from which the first structural unit is derived, at least one selected from the group consisting of (meth)acrylic acid and a salt thereof as a compound from which the second structural unit is derived, and (meth)acrylonitrile as a compound from which the third structural unit is derived.
<15> A method of producing an electrode binder composition for a non-aqueous secondary battery, the method including mixing the electrode binder polymer for a non-aqueous secondary battery according to any one of <1> to <8> and an aqueous medium.
<16> A method of producing an electrode slurry for a non-aqueous secondary battery, the method including mixing the electrode binder polymer for a non-aqueous secondary battery according to any one of <1> to <8>, an electrode active material with an aqueous medium.
<17> A method of producing an electrode for a non-aqueous secondary battery, including:
   applying the electrode slurry for a non-aqueous secondary battery according to <11> to at least a portion of a surface of a current collector; and drying thereof.

### Advantageous Effects of Invention

According to the present disclosure, it is possible to provide an electrode binder polymer for a non-aqueous secondary battery, which is capable of forming an electrode for a non-aqueous secondary battery that is excellent in appearance and excellent in peel strength of an electrode active material layer, and which is capable of producing a non-aqueous secondary battery in which the discharge capacity retention rate in a charge-discharge cycle is improved; an electrode binder composition for a non-aqueous secondary battery; an electrode slurry for a non-aqueous secondary battery; an electrode for a non-aqueous secondary battery; and a non-aqueous secondary battery; each including the electrode binder polymer for a non-aqueous secondary battery in the present disclosure.

In addition, it is possible to provide methods of producing the electrode binder polymer for a non-aqueous secondary battery, the electrode binder composition for a non-aqueous secondary battery, the electrode slurry for a non-aqueous secondary battery, and the electrode for a non-aqueous secondary battery, respectively.

### DESCRIPTION OF EMBODIMENTS

Hereinafter, embodiments will be described in detail. However, the present disclosure is not limited to the following embodiments. In the following embodiments, the constituent elements (including elemental steps and the like) thereof are not essential unless otherwise particularly specified. The same applies to numerical values and ranges thereof, which do not limit the present disclosure.

In the present disclosure, the numerical range indicated using "to" includes the numerical values described before and after "to" as the minimum value and the maximum value, respectively.

In the numerical ranges described stepwise in the present disclosure, the upper limit value or the lower limit value described in one numerical range may be replaced with the upper limit value or the lower limit value of another stepwise described numerical range. Further, in the numerical ranges described in the present disclosure, the upper limit value or the lower limit value of the numerical range may be replaced with values shown in Examples.

In the present disclosure, each component may include a plurality of types of corresponding substances. In a case in which a plurality of types of substances corresponding to each component exist in a composition or the like, the content or content amount of each component means the total content or content amount of the plurality of types of substances present in the composition or the like, unless otherwise specified.

In the present disclosure, the term "layer" includes not only a case where the layer is formed over the entire region when the region where the layer exists is observed, but also a case where it is formed only in a part of the region.

In the present disclosure, the term"(meth)acrylic acid" refers to one or both of methacrylic acid and acrylic acid. The term "(meth)acrylate" refers to one or both of methacrylate and acrylate. The term "(meth)acrylamide" refers to one or both of methacrylamide and acrylamide. The term "(meth)acrylonitrile" refers to one or both of methacrylonitrile and acrylonitrile. The term "(meth)acryloyloxy group" refers to one or both of a methacryloyloxy group and an acryloyloxy group.

In the present disclosure, "weight average molecular weight" is a pullulan-equivalent value calculated using gel permeation chromatography (GPC).

In the present disclosure, the term "hydroxy group" means a functional group having an - OH structure, but does not include an OH structure included in other functional groups such as a carboxy group and a sulfo group (sulfonic acid group). In addition, a phenolic hydroxyl group directly bonded to an aromatic compound such as a benzene ring is not included in the "hydroxy group" used in the present disclosure.

In the present disclosure, the term "ethylenically unsaturated bond" refers to a radically polymerizable ethylenically unsaturated bond unless otherwise specified.

Taking a structural unit A derived from a compound X having an ethylenically unsaturated bond B as an example, in the structural unit A contained in the polymer, the chemical structure of the portion other than the portion corresponding to the ethylenically unsaturated bond B of the compound X is the same chemical structure as that other than the ethylenically unsaturated bond B in the compound X before polymerization. For example, in a polymer having a structural unit derived from acrylonitrile, the structural unit has a chemical structure of "-CH₂CH(C≡N)-".

In addition, the compound X from which the structural unit A in the polymer is derived refers to a compound having a structure in which the bond between two carbon atoms bonded to other structural units is replaced with an ethylenically unsaturated bond. For example, the compound from which the structural unit "-CH₂CH(C≡N)-" is derived is acrylonitrile.

In the present disclosure, in a case in which ion exchange is performed on a structural unit having an ionic functional group after polymerization, the structural unit is referred to based on the structure after the ion exchange in the polymer. That is, for example, in a case in which ion exchange is performed after polymerization on a structural unit derived from sodium acrylate, the structural unit in the polymer becomes "-CH₂CH(COOH)-". In this case, this structural unit is referred to as a "structural unit derived from acrylic acid".

In the present disclosure, a salt of a functional group means a form in which an ion obtained by dissociating a part of a functional group and a counter ion other than a hydrogen ion and a hydroxide ion are bonded. For example, a salt of a carboxy group means a form in which a COO- ion and a cation other than a hydrogen ion are bonded. As an example, a sodium salt of a carboxy group means a structure represented by COONa.

In the present disclosure, the term "non-volatile content" refers to a component remaining after weighing 1 g of a composition into an aluminum dish with a diameter of 5 cm and drying it at 110°C for 5 hours while circulating air in a dryer at 1 atm (1013 hPa). Forms of the composition include, but are not limited to, solutions, dispersions, slurries, and the like. In addition, in the present disclosure, the term "non-volatile content concentration" is a mass ratio (% by mass) of the non-volatile content after drying under the above conditions to the mass (1 g) of the composition before drying.

### <1. Electrode Binder Polymer for Non-Aqueous Secondary Battery>

The electrode binder polymer for a non-aqueous secondary battery in the present disclosure (hereinafter may also be simply referred to as "binder polymer") includes a first structural unit represented by the following Formula (1) in an amount of from 12% by mol to 68% by mol; a second structural unit represented by the following Formula (2) in an amount of from 12% by mol to 87% by mol; and a third structural unit represented by the following Formula (3) in an amount of from 1.0% by mol to 60% by mol.

Formula (1): -CH₂CR¹(CONR²R³)-

[In Formula (1), R¹ is a hydrogen atom or an alkyl group. R² has a hydroxy group, and has a structure containing two or more carbon atoms between the nitrogen atom to which R² and R³ are bonded and the hydroxy group contained in R². R³ is a hydrogen atom, a hydrocarbon group, or a structure in which at least one of hydrogen atoms of a hydrocarbon group is substituted with a hydroxy group, or a structure having a hydroxy group and containing two or more carbon atoms between the nitrogen atom to which R² and R³ are bonded and the hydroxy group contained in R³.]

Formula (2): -CH₂CR⁴(COOX)-

[In Formula (2), R⁴ is a hydrogen atom or an alkyl group. COOX is at least one selected from the group consisting of a carboxy group and a salt thereof. That is, X is at least one selected from the group consisting of H and a structure corresponding to a cation. For example, in a case in which COOX is a sodium salt, it is COONa, and when it is an ammonium salt, it is COONH₄.]

Formula (3): -CH₂CR⁵(C≡N)-

[In Formula (3), R⁵ is a hydrogen atom, an alkyl group, or an alkoxy group.]

By using the binder polymer having the above configuration, an electrode for a non-aqueous secondary battery that is excellent in appearance and excellent in peel strength of an electrode active material layer can be produced, and by using the binder polymer having the above configuration, it becomes possible to produce a non-aqueous secondary battery which has an electrode for a non-aqueous secondary battery that is excellent in appearance and excellent in peel strength of an electrode active material layer, and which is excellent in discharge capacity retention rate.

### [1-1. First Structural Unit]

The first structural unit is represented by the following Formula (1).

Formula (1): -CH₂CR¹(CONR²R³)-

In the Formula (1), R¹ is a hydrogen atom or an alkyl group, preferably a hydrogen atom or an alkyl group having 3 or less carbon atoms, and more preferably a hydrogen atom or a methyl group. The steric positional relationship between R¹ and CONR²R³ is not limited. That is, optical isomers in the first structural unit are not distinguished, and any optical isomer may be used.

R² has a hydroxy group, and has a structure containing two or more carbon atoms between the nitrogen atom to which R² and R³ are bonded and the hydroxy group contained in R². In particular, R² is preferably a structure represented by R²¹-OH in which R²¹ is a hydrocarbon group or a structure in which at least one of hydrogen atoms of a hydrocarbon group is substituted with a hydroxy group, more preferably R²¹ is an alkylene structure, further preferably R²¹ is an alkylene structure having 10 or less carbon atoms, still more preferably R²¹ is an alkylene structure having 3 or less carbon atoms, and particularly preferably R²¹ is a structure represented by -CH₂-CH₂-.

R³ is a hydrogen atom, a hydrocarbon group, or a structure in which at least one of hydrogen atoms of a hydrocarbon group is substituted with a hydroxy group. In particular, R³ is preferably a hydrogen atom, an alkyl group, or a structure in which at least one of hydrogen atoms of an alkyl group is substituted with a hydroxy group. Further, R³ is preferably a hydrogen atom, an alkyl group having 2 or less carbon atoms, or a structure in which at least one of hydrogen atoms of an alkyl group having 2 or less carbon atoms is substituted with a hydroxy group. Furthermore, R³ is particularly preferably a hydrogen atom.

Alternatively, similarly to R², R³ may have a hydroxy group, and may have a structure containing two or more carbon atoms between the nitrogen atom to which R² and R³ are bonded and the hydroxy group contained in R³. Note that R³ may have the same structure as R².

Examples of the compound from which the first structural unit is derived include N-hydroxyethyl (meth)acrylamide, N-hydroxypropyl (meth)acrylamide, N-hydroxyoctane (meth)acrylamide, N-(2,3-dihydroxypropyl) (meth)acrylamide, and the like. The compound from which the first structural unit is derived is preferably N-hydroxyethyl (meth)acrylamide or N-hydroxypropyl (meth)acrylamide, and more preferably N-hydroxyethyl acrylamide.

In the first structural units contained in the binder polymer of the present disclosure, the structural unit derived from N-hydroxyethyl acrylamide is preferably 80% by mol or more, more preferably 90% by mol or more, and may be 100% by mol.

In the binder polymer in the present disclosure, one type of the first structural unit may be contained singly, or a plurality of types of the first structural units may be contained in combination.

### [1-2. Second Structural Unit]

The second structural unit is represented by the following Formula (2).

Formula (2): -CH₂CR⁴(COOX)-

In Formula (2), R⁴ is a hydrogen atom or an alkyl group, and in particular, it is preferably a hydrogen atom or an alkyl group having 3 or less carbon atoms, and more preferably a hydrogen atom or a methyl group. The steric positional relationship between R⁴ and COOX is not limited. That is, optical isomers in the second structural unit are not distinguished, and the second structural unit may be any optical isomer.

In the above Formula (2), COOX is at least one selected from the group consisting of a carboxy group (X=H) and a salt thereof. That is, COOX in the second structural unit is at least one selected from the group consisting of a carboxy group and a salt of a carboxy group with a monovalent cation. Regarding COOX in the second structural unit, examples of the salt of a carboxy group with a monovalent cation include a lithium salt of a carboxy group, a sodium salt of a carboxy group, a potassium salt of a carboxy group, and an ammonium salt of a carboxy group, and the like.

In particular, the binder polymer in the present disclosure preferably includes a second structural unit in which COOX in Formula (2) is a carboxy group, a second structural unit in which

COOX in Formula (2) is a lithium salt of a carboxy group, or a second structural unit in which COOX in Formula (2) is a sodium salt of a carboxy group. Furthermore, the binder polymer in the present disclosure more preferably includes a second structural unit in which COOX in Formula (2) is a sodium salt of a carboxy group.

In the binder polymer in the present disclosure, one type of the second structural unit may be contained singly, or a plurality of types of the second structural units may be contained in combination. The binder polymer in the present disclosure may be one that contains only the second structural unit in which COOX in Formula (2) is a carboxy group, may be one that contains only the second structural unit in which COOX in Formula (2) is a salt of a carboxy group, or may be one that contains both the second structural unit in which COOX in Formula (2) is a carboxy group and the second structural unit in which COOX in Formula (2) is a salt of a carboxy group. Further, in a case in which the binder polymer in the present disclosure includes a second structural unit in which COOX in Formula (2) is a salt of a carboxy group, it may include two or more types of second structural units having different types of cations constituting the salt of the carboxy group.

A compound from which the second structural unit is derived may be at least one selected from the group consisting of (meth)acrylic acid and a salt thereof. As the salt of the (meth)acrylate, which is a compound from which the second structural unit is derived, a salt of (meth)acrylic acid with a monovalent cation is preferable, and examples thereof include lithium (meth)acrylate, sodium (meth)acrylate, potassium (meth)acrylate, and ammonium (meth)acrylate. In the binder polymer in the present disclosure, it is preferable to use these salts of (meth)acrylic acid with a monovalent cation as a monomer, and it is preferable to use at least one selected from the group consisting of lithium (meth)acrylate, sodium (meth)acrylate, potassium (meth)acrylate, and ammonium (meth)acrylate as a monomer. Among them, it is more preferable to use at least one selected from the group consisting of lithium (meth)acrylate, sodium (meth)acrylate, and ammonium (meth)acrylate as a monomer, and it is still more preferable to use sodium acrylate as a monomer.

In particular, among the second structural units contained in the binder polymer in the present disclosure, a content of the second structural unit in which COOX in Formula (2) is a sodium salt of a carboxy group (that is, COONa) is preferably 20% by mol or more, more preferably 40% by mol or more, further preferably 60% by mol or more, and particularly preferably 80% by mol or more. By setting the second structural unit in which COOX in Formula (2) is a sodium salt of a carboxy group (that is, COONa) within this range, in an electrode containing the binder polymer, the peel strength of the electrode active material layer is further improved both before and after immersion in an electrolytic solution. Note that the second structural unit contained in the binder polymer in the present disclosure may be consisted of the second structural unit in which COOX in Formula (2) is a sodium salt of a carboxy group (that is, 100% by mol).

### [1-3. Third Structural Unit]

The third structural unit is represented by the following Formula (3).

Formula (3): -CH₂CR⁵(C≡N)-

In Formula (3), R⁵ is a hydrogen atom, an alkyl group, or an alkoxy group, preferably a hydrogen atom or a methyl group, and more preferably a hydrogen atom. Further, examples of the alkoxy group of R⁵ include an ethoxy group. The steric positional relationship between R⁵ and C≡N (nitrile group) is not limited. That is, optical isomers in the third structural unit are not distinguished, and the third structural unit may be any optical isomer.

Examples of a compound from which the third structural unit is derived include (meth)acrylonitrile, 3-ethoxy(meth)acrylonitrile, and the like. In particular, the compound from which the third structural unit is derived is preferably (meth)acrylonitrile, and more preferably acrylonitrile. The third structural unit contained in the binder polymer in the present disclosure preferably contains 80% by mol or more of a structural unit derived from acrylonitrile, more preferably 90% by mol or more thereof, and may contain 100% by mol thereof.

### [1-4. Content of Each Structural Unit in Binder Polymer]

A content of the first structural unit in the binder polymer is 12% by mol or more. In a case in which the content of the first structural unit is within this range, in an electrode containing the binder polymer, the retention rate of the peel strength of the electrode active material layer after immersion in an electrolytic solution relative to that before immersion in the electrolytic solution is further improved. Further, in a case in which the content of the first structural unit is within this range, when an electrode is produced using the binder polymer, the occurrence of streaks and aggregates on the electrode surface can be suppressed.

In particular, the content of the first structural unit in the binder polymer may be 20% by mol or more, may be 25% by mol or more, and may be 35% by mol or more. In a case in which the content of the first structural unit is within this range, in an electrode containing the binder polymer, the retention rate of the peel strength of the electrode active material layer after immersion in an electrolytic solution relative to that before immersion in the electrolytic solution is particularly improved. Further, in a case in which the content of the first structural unit is within this range, when an electrode is produced using the binder polymer, the occurrence of streaks and aggregates on the electrode surface can be particularly suppressed.

The content of the first structural unit in the binder polymer is 68% by mol or less. In a case in which the content of the first structural unit is within this range, in an electrode containing the binder polymer, the peel strength of the electrode active material layer is further improved both before and after immersion in an electrolytic solution. Further, the content of the first structural unit in the binder polymer is preferably 65% by mol or less, more preferably 55% by mol or less, further preferably 45% by mol or less, or may be 35% by mol or less. In a case in which the content of the first structural unit is within this range, in an electrode containing the binder polymer, the peel strength of the electrode active material layer is particularly improved both before and after immersion in an electrolytic solution.

Therefore, the content of the first structural unit in the binder polymer is from 12% by mol to 68% by mol, and may be from 12% by mol to 65% by mol, may be from 20% by mol to 55% by mol, may be from 25% by mol to 45% by mol, may be from 25% by mol to 35% by mol, or may be from 35% by mol to 45% by mol.

A content of the second structural unit in the binder polymer is 12% by mol or more, preferably 15% by mol or more, and more preferably 25% by mol or more. In a case in which the content of the second structural unit is within this range, in an electrode containing the binder polymer, the peel strength of the electrode active material layer is further improved both before and after immersion in an electrolytic solution. Further, the content of the second structural unit in the binder polymer may be 33% by mol or more, may be 38% by mol or more. Even in a case in which the content of the second structural unit is within this range, in an electrode containing the binder polymer, the peel strength of the electrode active material layer is further improved both before and after immersion in an electrolytic solution.

The content of the second structural unit in the binder polymer is 87% by mol or less, preferably 85% by mol or less, more preferably 70% by mol or less, further preferably 55% by mol or less, and particularly preferably 45% by mol or less. In a case in which the content of the first structural unit is within this range, in an electrode containing the binder polymer, the retention rate of the peel strength of the electrode active material layer after immersion in an electrolytic solution relative to that before immersion in the electrolytic solution is further improved.

Therefore, the content of the second structural unit in the binder polymer is from 12% by mol to 87% by mol, and may be from 15% by mol to 85% by mol, may be from 25% by mol to 70% by mol, may be from 33% by mol to 55% by mol, or may be from 38% by mol to 45% by mol.

A content of the third structural unit in the binder polymer is 1.0% by mol or more, preferably 3.0% by mol or more, more preferably 7.5% by mol or more, and still more preferably 20% by mol or more. In a case in which the content of the third structural unit is within this range, in an electrode containing the binder polymer, the peel strength of the electrode active material layer is further improved both before and after immersion in an electrolytic solution. The content of the third structural unit in the binder polymer may be 40% by mol or more. Even in a case in which the content of the second structural unit is within this range, in an electrode containing the binder polymer, the peel strength of the electrode active material layer is further improved both before and after immersion in an electrolytic solution.

The content of the third structural unit in the binder polymer is 60% by mol or less, and preferably 55% by mol or less. In a case in which the content of the third structural unit is within this range, in an electrode containing the binder polymer, the peel strength of the electrode active material layer is further improved both before and after immersion in an electrolytic solution. In addition, in a case in which the content of the third structural unit is within this range, the water solubility of the binder polymer can be improved, and the separation of the binder polymer during storage can be suppressed. The content of the third structural unit in the binder polymer may be 40% by mol or less. Even in a case in which the content of the third structural unit is within this range, in an electrode containing the binder polymer, the peel strength of the electrode active material layer is further improved both before and after immersion in an electrolytic solution. Further, even in a case in which the content of the third structural unit is within this range, the water solubility of the binder polymer can be improved, and the separation of the binder polymer during storage can be suppressed.

Therefore, the content of the third structural unit in the binder polymer is from 1.0% by mol to 60% by mol, and may be from 3.0% by mol to 55% by mol, may be from 7.5% by mol to 55% by mol, may be from 20% by mol to 40% by mol, or may be from 40% by mol to 55% by mol.

A total content of the first structural unit, the second structural unit, and the third structural unit in the binder polymer is preferably 80% by mol or more, preferably 90% by mol or more, more preferably 95% by mol or more, may be 95% by mol or more, or may be 100% by mol.

### [1-5. Other Structural Units]

The binder polymer may also have another structure that does not correspond to the first structural unit, the second structural unit, and the third structural unit. Examples of the other structural unit that does not correspond to the first structural unit, the second structural unit and the third structural unit in the binder polymer in the present disclosure include a structural unit derived from a (meth)acrylate in which a portion other than a (meth)acryloyloxy group is a hydrocarbon and a structural unit derived from a hydrocarbon having an ethylenically unsaturated bond. A total content of the structural unit derived from a (meth)acrylate in which a portion other than a (meth)acryloyloxy group is a hydrocarbon and the structural unit derived from a hydrocarbon having an ethylenically unsaturated bond is preferably 20% by mol or less, more preferably 10% by mol or less, and further preferably 5.0% by mol or less.

In a case in which the total content of the structural unit derived from a (meth)acrylate in which a portion other than a (meth)acryloyloxy group is a hydrocarbon and the structural unit derived from a hydrocarbon having an ethylenically unsaturated bond is within this range, the solubility of the binder polymer in an aqueous medium, the retention rate of the peel strength of the electrode active material layer after immersion in an electrolytic solution, and the discharge capacity retention rate in a charge-discharge cycle when formed into a battery can be further improved. Note that the binder polymer in the present disclosure may have a configuration that does not have any of the structural unit derived from a (meth)acrylate in which a portion other than a (meth)acryloyloxy group is a hydrocarbon and the structural unit derived from a hydrocarbon having an ethylenically unsaturated bond.

Further, examples of the other structural unit of the binder polymer in the present disclosure is not particularly limited, and preferably include a fourth structural unit represented by the following Formula (4). In an electrode containing the binder polymer, the discharge capacity retention rate in a charge-discharge cycle when formed into a battery can be further improved.

The fourth structural unit is represented by the following Formula (4).

Formula (4): -CH₂CR⁶(NR⁷COR⁸)-

In Formula (4), R⁶ is a hydrogen atom or an alkyl group, preferably a hydrogen atom or an alkyl group having 3 or less carbon atoms, more preferably a hydrogen atom or a methyl group, and further preferably a hydrogen atom. R⁷ is a hydrogen atom or a hydrocarbon group, preferably a hydrogen atom or an alkyl group, more preferably a hydrogen atom or an alkyl group having 5 or less carbon atoms, further preferably a hydrogen atom or an alkyl group having 3 or less carbon atoms, and further preferably a hydrogen atom. R⁸ is a hydrogen atom or a hydrocarbon group, more preferably a hydrogen atom or an alkyl group having 5 or less carbon atoms, further preferably a hydrogen atom or an alkyl group having 3 or less carbon atoms, and further preferably a methyl group. The steric positional relationship between R⁶ and NR⁷COR⁸ is not limited. That is, optical isomers in the fourth structural unit are not distinguished, and the fourth structural unit may be any optical isomer may be used.

In a case in which the binder polymer in the present disclosure has the fourth structural unit, a content of the fourth structural unit in the binder polymer is preferably 0.30% by mol or more, more preferably 0.80% by mol or more, further preferably 1.0% by mol or more, further preferably 1.5% by mol or more, and further preferably 2.0% by mol or more. In case in which the content of the fourth structural unit is within this range, the discharge capacity retention rate in a charge-discharge cycle when formed into a battery can be further improved. The content of the fourth structural unit in the binder polymer may be 10% by mol or more, or may be 15% by mol or more. Even in a case in which the content of the fourth structural unit is within this range, the discharge capacity retention rate in a charge-discharge cycle when formed into a battery can be further improved.

The content of the fourth structural unit in the binder polymer is preferably 30% by mol or less, more preferably 20% by mol or less, further preferably 18% by mol or less, and further preferably 15% by mol or less. In a case in which the content of the fourth structural unit is within this range, the discharge capacity retention rate in a charge-discharge cycle when formed into a battery can be further improved. The content of the fourth structural unit in the binder polymer may be 10% by mol or less, or may be 5.0% by mol or more. Even in a case in which the content of the fourth structural unit is within this range, the discharge capacity retention rate in a charge-discharge cycle when formed into a battery can be further improved.

That is, the content of the fourth structural unit in the binder polymer may be from 0.30% by mol to 30% by mol, may be from 0.80% by mol to 20% by mol, may be from 1.0% by mol to 10% by mol, may be from 1.5% by mol to 5.0% by mol, or may be from 8.0% by mol to 20% by mol.

Examples of a compound from which the fourth structural unit is derived include N-vinylformamide, N-vinylacetamide, and the like. In particular, N-vinylacetamide is preferable as the compound from which the fourth structural unit is derived. In a case in which the binder polymer in the present disclosure has the fourth structural unit, a total content of a structural unit derived from N-vinylformamide and a structural unit derived from N-vinylacetamide in the fourth structural unit contained in the binder polymer in the present disclosure is preferably 80% by mol or more, more preferably 90% by mol or more, and may be 100% by mol. Further, in a case in which the binder polymer in the present disclosure has the fourth structural unit, the content of the structural unit derived from N-vinylacetamide in the fourth structural unit contained in the binder polymer in the present disclosure is preferably 80% by mol or more, more preferably 90% by mol or more, and may be 100% by mol.

### [1-6. Molecular Weight of Binder Polymer]

A weight-average molecular weight of the binder polymer in the present disclosure is preferably 1,500,000 or more, more preferably 2,000,000 or more, and further preferably 3,500,000 or more. In a case in which the weight-average molecular weight of the binder polymer is within this range, in an electrode containing the binder polymer, the peel strength of the electrode active material layer is further improved both before and after immersion in an electrolytic solution, and the discharge capacity retention rate in a charge-discharge cycle when formed into a battery can be further improved.

Further, the weight-average molecular weight of the binder polymer is preferably 10,000,000 or less, more preferably 7,000,000 or less, further preferably 5,500,000 or less, and particularly preferably 4,700,000 or less. By setting the weight-average molecular weight of the binder polymer within this range, in the preparation process of an electrode slurry for a non-aqueous secondary battery described later, an increase in viscosity is suppressed, and components such as an electrode active material contained in the electrode slurry for a non-aqueous secondary battery can be sufficiently dispersed.

That is, the weight-average molecular weight of the binder polymer may be from 1,500,000 to 10,000,000, may be from 2,000,000 to 7,000,000, may be from 3,500,000 to 5,500,000, or may be from 3,500,000 to 4,700,000.

### [1-7. Solubility of Binder Polymer]

The binder polymer in the present disclosure can be dissolved in an aqueous medium. Here, examples of the aqueous medium include water and a solvent containing water. A content of water in the aqueous medium is preferably 80% by mass or more, more preferably 90% by mass or more, may be 95% by mass or more, or may be 100% by mass. The aqueous medium may contain a hydrophilic solvent other than water. The hydrophilic solvent is not particularly limited, and examples thereof include methanol, ethanol, N-methylpyrrolidone, and the like.

A solubility in water at 25°C of the binder polymer in the present disclosure is preferably 5.0 g/100 gH₂O or more, more preferably 8.0 g/100 gH₂O or more, further preferably 11 g/100 gH₂O or more, further preferably 20 g/100 gH₂O or more, and further preferably 25 g/100 gH₂O or more. By setting the solubility in water at 25°C of the binder polymer in the present disclosure within this range, an electrode for a non-aqueous secondary battery can be easily produced from a slurry in a state where the binder polymer is dissolved in an aqueous medium.

### <2. Method of Producing Binder Polymer>

The synthesis method of the binder polymer in the present disclosure is not particularly limited, and it is preferably performed by radical polymerization in an aqueous medium. More specifically, examples thereof include a method of performing polymerization by charging all monomers used for polymerization at once, a method of performing polymerization while continuously supplying monomers used for polymerization, and the like. For example, according to the methods of Examples described later, all monomers used for synthesis of the binder polymer are converted into structural units of the binder polymer. A temperature for performing radical polymerization is not particularly limited, and is preferably from 30°C to 90°C.

In the case of radical polymerization, examples of polymerization initiators include ammonium persulfate, sodium persulfate, hydrogen peroxide, t-butyl hydroperoxide, an azo compound, and the like, but are not limited thereto. Examples of the azo compound include 2,2'-azobis(2-methylpropionamidine) dihydrochloride and the like. In a case in which polymerization is performed in an aqueous medium, it is preferable to use a water-soluble polymerization initiator. Further, if necessary, redox polymerization may be performed by using a radical polymerization initiator and a reducing agent in combination during polymerization. Examples of the reducing agent include sodium bisulfite, Rongalite, ascorbic acid, and the like.

The aqueous medium preferably contains water. A content of water in the aqueous medium is preferably 80% by mass or more, more preferably 90% by mass or more, may be 95% by mass or more, or may be 100% by mass. The aqueous medium may contain a hydrophilic solvent other than water. The hydrophilic solvent is not particularly limited, and examples thereof include methanol, ethanol, N-methylpyrrolidone, and the like.

### <3. Electrode Binder Composition for Non-Aqueous Secondary Battery>

The electrode binder composition for a non-aqueous secondary battery in the present disclosure (hereinafter sometimes referred to as "electrode binder composition") contains the binder polymer described above, an aqueous medium, and the like. Further, the electrode binder composition may contain another component such as a pH adjuster and a surfactant as necessary. The electrode binder composition may contain one type of the binder polymer in the present disclosure singly, or may contain two or more types of the binder polymer in the present disclosure. The electrode binder composition is obtained by mixing the binder polymer described above and an aqueous medium. It is preferable that the binder polymer in the electrode binder composition is entirely dissolved in the aqueous medium at 25°C. In a case in which the electrode binder composition contains two or more types of binder polymers, it is preferable that all of these two or more types of binder polymers are dissolved in the aqueous medium at 25°C.

Here, the phrase "the binder polymer is entirely dissolved in the aqueous medium at 25°C" means that the binder polymer is dissolved in the aqueous medium in a range equal to or less than the solubility of the binder polymer in the aqueous medium at 25°C. In a case in which the electrode binder composition contains two or more types of binder polymers, it means that each binder polymer is dissolved in the aqueous medium in a range equal to or less than its respective solubility. Therefore, even in a case in which a part of the binder polymer precipitates from a saturated solution of the binder polymer due to a temperature decrease, or in a case in which some binder polymers among two or more types of binder polymers precipitate due to a temperature decrease, it is considered that the binder polymer is entirely dissolved in the aqueous medium.

The aqueous medium contained in the electrode binder composition preferably contains water. A content of water in the aqueous medium is preferably 80% by mass or more, more preferably 90% by mass or more, may be 95% by mass or more, or may be 100% by mass. The aqueous medium may contain a hydrophilic solvent other than water. The hydrophilic solvent is not particularly limited, and examples thereof include methanol, ethanol, N-methylpyrrolidone, and the like.

The aqueous medium contained in the electrode binder composition may be the same as or different from the aqueous medium used for the synthesis of the binder polymer.

A content of the binder polymer in the electrode binder composition is preferably 30% by mass or less, more preferably 20% by mass or less, and further preferably 15% by mass or less. In a case in which the content of the binder polymer in the electrode binder composition is within this range, it is possible to suppress an increase in the viscosity of the electrode binder composition, and to efficiently disperse an electrode active material and the like when an electrode slurry is prepared by mixing with an electrode active material described later and the like.

The content of the binder polymer in the electrode binder composition is preferably 3.0% by mass or more, more preferably 5.0% by mass or more, and further preferably 8.0% by mass or more. In a case in which the content of the binder polymer in the electrode binder composition is within this range, the electrode slurry and the electrode can be produced from a smaller amount of the electrode binder composition by suppressing the amount of the volatile matter.

A pH of the electrode binder composition is preferably 4.0 or more, more preferably 5.0 or more, and further preferably 6.0 or more. In a case in which the pH of the electrode binder composition is within this range, when an electrode slurry is prepared by mixing with an electrode active material described later and the like, the electrode active material and the like can be efficiently dispersed. The pH of the electrode binder composition is preferably 10 or less, more preferably 9.0 or less, and further preferably 8.0 or less. In a case in which the pH of the electrode binder composition is within this range, when an electrode slurry is prepared by mixing with an electrode active material described later and the like, the electrode active material and the like can be efficiently dispersed. Here, the pH is a value measured by a pH meter at a liquid temperature of 23°C.

That is, the pH of the electrode binder composition may be from 4.0 to 10.0, from 5.0 to 9.0, or from 6.0 to 8.0.

### <4. Electrode Slurry for Non-Aqueous Secondary Battery>

The electrode slurry for a non-aqueous secondary battery in the present disclosure (hereinafter sometimes referred to as "electrode slurry") contains the binder polymer described above, an electrode active material, and an aqueous medium. The electrode slurry is obtained by mixing the binder polymer described above, an electrode active material, and an aqueous medium. It is preferable that the binder polymer in the electrode slurry is entirely dissolved in the aqueous medium.

Here, the phrase "the binder polymer is entirely dissolved in the aqueous medium" has the same meaning as described in the section of <3. Electrode Binder Composition for Non-Aqueous Secondary Battery>.

The electrode slurry may contain a conductive auxiliary agent, a thickener, and the like as necessary, but from the viewpoint of simplifying the electrode slurry preparation process, it is preferable not to contain a thickener. A method of producing the electrode slurry is not particularly limited, and examples thereof include a method of mixing necessary components using a mixing device of a stirring type, a rotating type, a shaking type, or the like.

The electrode active material is not particularly limited, and in a case in which the non-aqueous secondary battery is a lithium-ion secondary battery, examples of the negative electrode active material include a conductive polymer, a carbon material, lithium titanate, silicon, a silicon compound, and the like. Examples of the conductive polymer include polyacetylene, polypyrrole, and the like. Examples of the carbon material include a coke such as petroleum coke, pitch coke, and coal coke; a carbon black such as a carbonized organic compound, a carbon fiber, and acetylene black; and a graphite such as an artificial graphite and a natural graphite. Examples of the silicon compound include SiOₓ (0.1 ≤ x ≤ 2.0) and the like. A specific example of the artificial graphite includes SCMG-XRs (manufactured by Resonac Corporation) and the like. Note that as the negative electrode active material, two or more types of the materials listed here may be combined. Further, as the negative electrode active material, a composite material containing Si and graphite (Si/graphite) or the like may be used.

Among these negative electrode active materials, it is preferable to use a carbon material, lithium titanate, silicon, a silicon compound, and the like from the viewpoint of large energy density per volume. Further, as the negative electrode active material, it is preferable to use a carbon material such as a coke, a carbonized organic compound, and a graphite; and a silicon-containing material such as SiOₓ (0.1 ≤ x ≤ 2.0), Si, and Si/graphite. In a case in which the silicon-containing material is used, the effect of improving the binding property by the binder polymer in the present disclosure is remarkable.

On the other hand, examples of the positive electrode active material of a lithium-ion secondary battery include lithium cobaltate (LiCoO₂); a lithium composite oxide containing nickel; spinel-type lithium manganate (LiMn₂O₄); olivine-type lithium iron phosphate; and a chalcogen compound such as TiS₂, MnO₂, MoO₃ and V₂O₅. The positive electrode active material may contain any one of these compounds singly, or may contain a plurality of types thereof. Further, an oxide of another alkali metal can also be used. Examples of the lithium composite oxide containing nickel include a Ni-Co-Mn-based lithium composite oxide, a Ni-Mn-Al-based lithium composite oxide, a Ni-Co-Al-based lithium composite oxide, and the like. Specific examples of the positive electrode active material include LiNi_{1/3}Mn_{1/3}Co_{1/3}O₂, LiNi_{3/5}Mn_{1/5}Co_{1/5}O₂, and the like.

The aqueous medium contained in the electrode slurry preferably contains water. A content of water in the aqueous medium is preferably 80% by mass or more, more preferably 90% by mass or more, may be 95% by mass or more, or may be 100% by mass. The aqueous medium may contain a hydrophilic solvent other than water. The hydrophilic solvent is not particularly limited, and examples thereof include methanol, ethanol, N-methylpyrrolidone, and the like.

The aqueous medium contained in the electrode slurry may be the same as the aqueous medium contained in the electrode binder composition, or may be the same as the aqueous medium used for the synthesis of the binder polymer. The aqueous medium contained in the electrode slurry may be different from the aqueous medium contained in the electrode binder composition and the aqueous medium used for the synthesis of the binder polymer.

Examples of the conductive auxiliary agent contained in the electrode slurry include a carbon black, a vapor-grown carbon fiber, and the like. Specific examples of the vapor-grown carbon fiber include VGCF-H (manufactured by Resonac Corporation).

A non-volatile content concentration of the electrode slurry is preferably 30% by mass or more, and more preferably 40% by mass or more. By setting the non-volatile content concentration of the electrode slurry within this range, more electrode active material layers can be formed with a small amount of the electrode slurry. Further, the non-volatile content concentration of the electrode slurry is preferably 70% by mass or less, and more preferably 60% by mass or less. That is, the non-volatile content concentration of the electrode slurry may be from 30% by mass to 70% by mass, or may be from 40% by mass to 60% by mass. Note that the non-volatile content concentration of the electrode slurry can be adjusted by the amount of the aqueous medium to be used.

A content amount of the binder polymer in the electrode slurry is preferably 0.50% by mass or more, more preferably 1.0% by mass or more, further preferably 2.0% by mass or more, and as an example, may be 3.0% by mass, with respect to a total mass of the electrode active material, the conductive auxiliary agent and the binder polymer. By setting the content amount of the binder polymer in the electrode slurry within this range, the binding properties between the electrode active materials and between the electrode active material and the current collector can be improved by the binder polymer.

The content amount of the binder polymer in the electrode slurry is preferably 7.0% by mass or less, more preferably 5.0% by mass or less, and further preferably 4.0% by mass or less, with respect to the total mass of the electrode active material, the conductive auxiliary agent and the binder polymer. By setting the content amount of the binder polymer in the electrode slurry within this range, the charge/discharge capacity of the electrode active material layer formed from the electrode slurry can be increased, and the internal resistance when formed into a battery can be reduced.

Therefore, the content amount of the binder polymer in the electrode slurry may be from 0.50% by mass to 7.0% by mass, from 1.0% by mass to 5.0% by mass, or from 2.0% by mass to 4.0% by mass, with respect to the total mass of the electrode active material, the conductive auxiliary agent and the binder polymer.

### <5. Electrode for Non-Aqueous Secondary Battery>

The electrode for a non-aqueous secondary battery in the present disclosure (hereinafter sometimes referred to as "electrode") includes a current collector and an electrode active material layer provided on or above at least a part of a region of a surface of the current collector. The electrode active material layer contains an electrode active material and the binder polymer described above. Examples of the shape of the electrode include a laminate, a wound body, and the like, but are not particularly limited. The current collector is not particularly limited, and is preferably a sheet-like metal having a thickness of from 0.001 mm to 0.5 mm. Examples of the metal include iron, copper, aluminum, nickel, stainless steel, and the like. In a case in which the non-aqueous secondary battery is a lithium-ion secondary battery, aluminum is preferable as a material for the current collector of the positive electrode, and copper is preferable as a material for the current collector of the negative electrode.

The electrode in the present disclosure can be produced by a method in which the electrode slurry described above is applied to at least a part of the surface of the current collector, preferably the entire surface thereof, and dried, but the method is not limited thereto.

Examples of a method of applying the electrode slurry on or above the current collector include a reverse roll method, a direct roll method, a doctor blade method, a knife method, an extrusion method, a curtain method, a gravure method, a bar method, a dip method, a squeeze method, and the like. Among these, it is preferable to apply the electrode slurry on or above the current collector by a doctor blade method, a knife method, or an extrusion method, and among them, it is more preferable to apply the electrode slurry on or above the current collector using a doctor blade. This is because these methods are suitable for various physical properties such as viscosity of the electrode slurry and drying property, and a coated film with an excellent surface state can be obtained.

The electrode slurry may be applied to only one side of the current collector, or may be applied to both sides. In a case in which the electrode slurry is applied to both sides of the current collector, it may be applied sequentially one side at a time, or both sides may be applied concurrently. Further, the electrode slurry may be applied continuously to the current collector, or may be applied intermittently. An application amount of the electrode slurry can be appropriately determined according to the design capacity of the battery, the composition of the electrode slurry, and the like. The application amount of the electrode active material layer after drying (in the case of application to both sides, the application amount per one side) is preferably from 4 mg/cm² to 20 mg/cm², and more preferably from 6 mg/cm² to 16 mg/cm².

By drying the electrode slurry applied to the current collector, an electrode active material layer is formed on or above the current collector. A drying method of the electrode slurry is not particularly limited, and hot air, reduced pressure or vacuum environment, (far-)infrared rays, electron beams, microwaves, or low-temperature air can be used singly or in combination. A drying temperature is preferably from 40°C to 180°C, and a drying time is preferably from 1 minute to 30 minutes.

The electrode sheet may be used directly as an electrode, or may be cut into a size and shape appropriate for an electrode. A method of cutting the electrode sheet is not particularly limited, and a slit, a laser, a wire cut, a cutter, a Thomson, or the like can be used.

The electrode sheet may be pressed as necessary before or after cutting the electrode sheet. By pressing the electrode sheet, the electrode active material can be more strongly bonded to the electrode, and further, the non-aqueous battery can be made compact by thinning the electrode. As a pressing method, a general method can be used, and it is particularly preferable to use a mold pressing method or a roll pressing method. A pressing pressure is not particularly limited, and is preferably from 0.5 t/cm² to 5 t/cm², which is a range that the pressing does not affect doping and de-doping of lithium ions or the like in the electrode active material.

### <6. Non-Aqueous Secondary Battery>

The non-aqueous secondary battery in the present disclosure includes the electrode for a non-aqueous secondary battery in the present disclosure. The non-aqueous secondary battery in the present disclosure is a secondary battery that involves movement of ions between a positive electrode and a negative electrode during charging and discharging. The non-aqueous secondary battery in the present disclosure includes a positive electrode active material in a positive electrode and a negative electrode active material in a negative electrode. These positive electrode active material and negative electrode active material are materials capable of insertion (intercalation) and removal (deintercalation) of ions. Examples of the non-aqueous secondary battery in the present disclosure include a lithium-ion secondary battery.

As one embodiment of the non-aqueous secondary battery in the present disclosure, a lithium-ion secondary battery will be described, but the configuration of the non-aqueous secondary battery is not limited to the configuration described below. The lithium-ion secondary battery described as the present embodiment has a configuration in which components such as a positive electrode, a negative electrode, an electrolytic solution, and a separator as necessary are housed in an exterior body. In the lithium-ion secondary battery in the present embodiment, at least one of the positive electrode or the negative electrode contains the binder polymer described above.

As the electrolytic solution, a non-aqueous liquid having ionic conductivity is used. Examples of the electrolytic solution include a solution in which an electrolyte is dissolved in an organic solvent, an ionic liquid and the like, but a solution in which an electrolyte is dissolved in an organic solvent is preferable because a battery with low manufacturing cost and low internal resistance can be obtained.

As the electrolyte, an alkali metal salt can be used, and it can be appropriately selected according to the type of electrode active material and the like. Examples of the electrolyte include LiClO_{4,} LiBF₆, LiPF_{6,} LiCF₃SO₃, LiCF₃CO₂, LiAsF₆, LiSbF₆, LiB₁₀Cl₁₀, LiAlCl₄, LiCl, LiBr, LiB(C₂H₅)₄, CF₃SO₃Li, CH₃SO₃Li, LiCF₃SO₃, LiC₄F₉SO₃, Li(CF₃SO₂)₂N, aliphatic lithium carboxylates, and the like. Further, other alkali metal salts can also be used as the electrolyte.

The organic solvent for dissolving the electrolyte is not particularly limited, and examples thereof include carbonate ester compounds such as ethylene carbonate (EC), propylene carbonate (PC), diethyl carbonate (DEC), methyl ethyl carbonate (MEC), dimethyl carbonate (DMC), fluoroethylene carbonate (FEC), and vinylene carbonate (VC); nitrile compounds such as acetonitrile; and carboxylic acid esters such as ethyl acetate, propyl acetate, methyl propionate, ethyl propionate, and propyl propionate. These organic solvents may be used singly or in combination of two or more.

As the exterior body, a metal, an aluminum laminate material, or the like can be used appropriately. A shape of the battery may be any shape such as a coin type, a button type, a sheet type, a cylindrical type, a square type, or a flat type.

### Examples

Hereinafter, an example of the embodiment in the present disclosure will be specifically described by way of Examples, but the embodiment is not limited to these Examples. The Examples and Comparative Examples shown below are examples in which a negative electrode binder, a negative electrode slurry, a negative electrode, and a lithium-ion secondary battery for a lithium-ion secondary battery were produced.

### <1. Preparation of Negative Electrode Binder Composition (Electrode Binder Composition)>

In each of Examples 1 to 9 and Comparative Examples 1 to 7, 100 parts by mass in a total of monomers in the proportions shown in Table 1 (in a case in which a monomer is used as a solution, the amount of the monomer in the table indicates the amount of the monomer itself not including the solvent), 0.2 parts by mass of 2,2'-azobis(2-methylpropionamidine) dihydrochloride as a radical polymerization initiator, 0.05 parts by mass of ammonium persulfate, and 567 parts by mass of water were charged at 30°C into a separable flask equipped with a cooling tube, a thermometer, a stirrer, and a dropping funnel. This was heated to 80°C and polymerization was performed for 4 hours to produce a copolymer or polymer, and a reaction solution containing the copolymer or polymer was obtained.

Note that "Monomer (A)" in Table 1 is a compound from which the first structural unit is derived. "Monomer (B)" in Table 1 is a compound from which the second structural unit is derived. "Monomer (C)" in Table 1 is a compound from which the third structural unit is derived. "Monomer (D)" in Table 1 is a compound from which the fourth structural unit is derived. Note that "Monomer (A')" in Table 1 is not encompassed by the compound from which the first structural unit is derived, but it is a similar compound.

Water was added to the reaction solution containing the copolymer or polymer after polymerization to obtain negative electrode binder compositions of Examples 1 to 9 and Comparative Examples 1 to 7 having a non-volatile content concentration of 10.0% by mass.

**[Table 1]**

| | Monomer (A) | Monomer (A') | | | Monomer (B) | | Monomer (C) | Monomer (D) | Copolymer properties | Composition | Water solubility at 25°C |
|---|---|---|---|---|---|---|---|---|---|---|---|
| | HEAA [mol%] | HMAA [mol%] | Aam [mol%] | HEMA [mol%] | AaNa [mol%] | AaLi [mol%] | AN [mol%] | NVA [mol%] | Mw (×10⁴) | pH | [g/100gH₂O] |
| Example 1 | 30 | | | | 40 | | 30 | | 400 | 7.5 | ≥25 |
| Example 2 | 50 | | | | 40 | | 10 | | 450 | 7.5 | ≥25 |
| Example 3 | 60 | | | | 31 | | 10 | | 420 | 7.2 | ≥25 |
| Example 4 | 15 | | | | 35 | | 50 | | 320 | 7.3 | ≥25 |
| Example 5 | 40 | | | | 31 | | 29 | | 390 | 7.2 | ≥25 |
| Example 6 | 15 | | | | 80 | | 5 | | 500 | 7.8 | ≥25 |
| Example 7 | 30 | | | | 20 | 20 | 30 | | 550 | 8.0 | ≥25 |
| Example 8 | 28 | | | | 40 | | 30 | 2 | 400 | 7.5 | ≥25 |
| Example 9 | 15 | | | | 40 | | 30 | 15 | 350 | 7.5 | ≥25 |
| Comparative Example1 | | | 30 | | 40 | | 30 | | 500 | 7.5 | ≥25 |
| Comparative Example2 | | 30 | | | 40 | | 30 | | 600 | 7.5 | ≥25 |
| Comparative Example 3 | | | | 30 | 40 | | 30 | | 500 | 7.5 | ≥25 |
| Comparative Example 4 | | | | | 90 | | 10 | | 120 | 7.9 | ≥25 |
| Comparative Example 5 | 40 | | | | 60 | | | | 300 | 7.6 | ≥25 |
| Comparative Example 6 | 70 | | | | 20 | | 10 | | 400 | 7.0 | ≥25 |
| Comparative Example 7 | 30 | | | | 10 | | 60 | | 60 | 6.5 | <11 |

The abbreviations of the monomers described in Table 1 are as follows.
HEAA: N-hydroxyethyl acrylamide
HMAA: N-hydroxymethyl acrylamide
Aam: acrylamide
HEMA: hydroxyethyl acrylate
AaNa: sodium acrylate
AaLi: lithium acrylate
AN: acrylonitrile
NVA: N-vinyl acetamide

### <2. Various Measurements for Negative Electrode Binder Composition>

The following measurements were performed on the binder polymer and the negative electrode binder composition. The measurement results are as shown in Table 1.

### [2-1. Weight-Average Molecular Weight of Binder Polymer]

The weight-average molecular weight of each binder polymer was measured using gel permeation chromatography (GPC) under the following conditions.

GPC device: GPC-101 (manufactured by Resonac Corporation)
Solvent: 0.1 M NaNO₃ aqueous solution
Sample column: Shodex Column Ohpak SB-806 HQ (8.0 mm I.D. × 300 mm) × 2
Reference column: Shodex Column Ohpak SB-800 RL (8.0 mm I.D. × 300 mm) × 2
Column temperature: 40°C
Sample concentration: 0.1% by mass
Detector: RI-71S (manufactured by Shimadzu Corporation)
Pump: DU-H2000 (manufactured by Shimadzu Corporation)
Pressure: 1.3 MPa
Flow rate: 1 ml/min
Molecular weight standard: Pullulan (P-5, P-10, P-20, P-50, P-100, P-200, P-400, P-800, P-1300, P-2500 (manufactured by Resonac Corporation))

### [2-2. pH of Negative Electrode Binder Composition]

The pH of each negative electrode binder composition was measured using a pH meter (manufactured by TOA DKK) at the liquid temperature of 23°C.

### [2-3. Solubility of Binder Polymer in Water]

The solubility of the negative electrode binder composition in water was evaluated as follows. That is, after water was removed by drying the negative electrode binder composition at 110°C for 5 hours, ion-exchanged water was added to the dried product to a concentration of 25 g/100 gH₂O or 11 g/100 gH₂O, and the mixture was stirred at 25°C for 24 hours, and was visually inspected at 25°C for white turbidity in the appearance or occurrence of a precipitate.

### <3. Preparation of Negative Electrode Slurry (Electrode Slurry)>

76.8 parts by mass of SCMG-XRs (manufactured by Resonac Corporation) as graphite, 19.2 parts by mass of silicon monoxide (SiO) (manufactured by Sigma-Aldrich), 1 part by mass of VGCF-H (manufactured by Resonac Corporation), 30 parts by mass of the negative electrode binder composition (including 3 parts by mass of the copolymer and 27 parts by mass of water), and 20 parts by mass of water were mixed. Mixing was performed by kneading at 2,000 revolutions/minute for 4 minutes using a stirring-type mixing device (rotation-revolution stirring mixer). 53 parts by mass of water was further added to the obtained mixture, and the mixture was further kneaded at 2000 revolutions/minute for 4 minutes with the above-mentioned mixing device to prepare a negative electrode slurry.

### <4. Production of Battery>

### [4-1. Production of Negative Electrode]

The prepared negative electrode slurry was applied to one side of a copper foil (current collector) having a thickness of 10 µm using a doctor blade so that the weight after drying was 8 mg/cm². The copper foil to which the negative electrode slurry was applied was dried at 60°C for 10 minutes and then further dried at 110°C for 5 minutes to produce a negative electrode sheet in which a negative electrode active material layer was formed. This negative electrode sheet was pressed at a press pressure of 10 t using a roll press. The pressed negative electrode sheet was cut to a size of 52 mm × 42 mm, and a conductive tab was attached to produce a negative electrode.

### [4-2. Production of Positive Electrode]

90 parts by mass of LiNi_{3/5}Mn_{1/5}Co_{1/5}O₂ as a positive electrode active material, 5 parts by mass of acetylene black, and 5 parts by mass of polyvinylidene fluoride were mixed, and then 100 parts by mass of N-methylpyrrolidone was mixed therewith to prepare a positive electrode slurry (the ratio of LiNi_{3/5}Mn_{1/5}Co_{1/5}O₂ based on the mass in the solid content was 0.90).

The prepared positive electrode slurry was applied to one side of an aluminum foil (current collector) having a thickness of 15 µm by a doctor blade method using a doctor blade so that the weight after drying was 27 mg/cm². The aluminum foil to which the positive electrode slurry was applied was dried at 120°C for 5 minutes and then pressed by a roll press to produce a positive electrode sheet in which a positive electrode active material layer having a thickness of 100 µm was formed. The obtained positive electrode sheet was cut to a size of 50 mm × 40 mm (5.0 cm × 4.0 cm), and a conductive tab was attached to produce a positive electrode.

A mixed solvent in which ethylene carbonate (EC), ethyl methyl carbonate (EMC), and diethyl carbonate (DMC) were mixed at a volume ratio of 30:50:20 was prepared. In this mixed solvent, LiPF₆ was dissolved to a concentration of 1.0 mol/L, vinylene carbonate (VC) was dissolved to a concentration of 1.0% by mass, and fluoroethylene carbonate (FEC) was dissolved to a concentration of 2.0% by mass to prepare an electrolytic solution. In the following description, unless otherwise specified, "electrolytic solution" indicates the electrolytic solution prepared here.

The positive electrode and the negative electrode were housed in an aluminum laminate exterior body (battery pack) such that their respective active material layers faced each other with a separator using a polyolefin porous film interposed therebetween. The electrolytic solution was injected into this exterior body and packed with a vacuum heat sealer to obtain a laminate-type battery.

### <5. Evaluation of Negative Electrode and Battery>

The negative electrode and the battery of each of Examples and Comparative Examples were evaluated. The evaluation method is as follows, and the evaluation results are as shown in Table 2.

### [5-1. Negative Electrode Appearance]

Each of the produced negative electrode was visually observed, and the number of coating streaks generated due to poor leveling during slurry coating and the number of aggregates were measured. Note that it is presumed that the aggregates are generated due to poor dispersion of the negative electrode active material and the conductive auxiliary agent in the slurry.

### [5-2. Peel Strength of Negative Electrode Active Material Layer]

The peel strength of the negative electrode active material layer to the current collector was measured as follows. The negative electrode sheet before pressing in the above negative electrode production process was cut to a size of 25 mm × 100 mm to prepare a test piece. Two test pieces were prepared for each of the Examples and Comparative Examples, and for one of the two test pieces, the peel strength of the negative electrode active material layer was measured directly, i.e., before immersion in the electrolytic solution. For the other test piece, the peel strength of the negative electrode active material layer was measured after immersion in the electrolytic solution.

In the immersion in the electrolytic solution, the test piece was immersed in the electrolytic solution in a closed container, kept at 45°C for 72 hours, taken out, immersed in ethyl methyl carbonate (EMC) for 1 minute, and further dried at 23°C and 50% RH for 2 hours.

The peel strength of the negative electrode active material layer was measured as follows. First, the negative electrode active material layer on the test piece and a stainless steel (SUS) plate having a width of 50 mm and a length of 200 mm were bonded together using double-sided tape (NITTO TAPE No. 5, manufactured by Nitto Denko Corporation) such that the center of the test piece and the center of the SUS plate were aligned. Note that the double-sided tape was bonded so as to cover the entire area of the test piece.

Next, after leaving for 10 minutes in a state where the test piece and the SUS plate were bonded, the negative electrode active material layer was peeled off from one end of the test piece in the longitudinal direction by 20 mm, and the test piece on the copper foil side was folded back by 180°. The folded portion (the copper foil side of the portion of the test piece from which the negative electrode active material layer was peeled off) was gripped by the upper chuck of the tester. Further, one end of the SUS plate from which the negative electrode active material layer had been peeled off was gripped by the lower chuck of the same tester. In that state, the copper foil was peeled off from the test piece at a rate of 100 ± 10 mm/min to obtain a graph of peel length (mm) vs. peel force (mN). In the obtained graph, an average value (mN) of the peel force at a peel length of from 10 mm to 45 mm was calculated, and a value obtained by dividing the average value of the peel force by the width of the test piece of 25 mm was defined as the peel strength (mN/mm) of the negative electrode active material layer. Note that in any of the Examples and Comparative Examples, neither peeling between the double-sided tape and the SUS plate nor interfacial peeling between the double-sided tape and the negative electrode active material layer occurred during the test.

### [5-3. Battery Characteristics]

Battery characteristics were evaluated by calculating the discharge capacity retention rate in a charge-discharge cycle using the laminate-type batteries produced in each of Examples and Comparative Examples.

First, under the condition of 25 °C, charging and discharging were performed with one set of the following operations (i) to (iv) defined as one cycle. The time integral value of the current in steps (i) and (ii) was defined as the charge capacity, and the time integral value of the current in step (iv) was defined as the discharge capacity. Then, the discharge capacity of the 1st cycle and the discharge capacity of the 100th cycle were measured, and the discharge capacity retention rate after 100 cycles was calculated by the following Equation. (Equation): 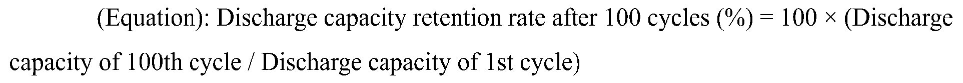 Discharge capacity retention rate after 100 cycles (%) = 100 × (Discharge capacity of 100th cycle / Discharge capacity of 1st cycle)
(i) Charging at a current of 0.5 C until the voltage reaches 4.2 V (constant current (CC) charge)
(ii) Charging at a voltage of 4.2 V until the current reaches 0.05 C (constant voltage (CV) charge)
(iii) Leaving to stand for 30 minutes
(iv) Discharging at a current of 0.5 C until the voltage reaches 2.75 V (constant current (CC) discharge)

### [5-4. Test Results]

The results for the peel strength of the negative electrode active material layer, battery characteristics, and negative electrode appearance evaluated above are shown in Table 2.

**[Table 2]**

| | Peel Strength of Negative Electrode Active Material Layer | | | Battery Characteristics | Negative Electrode Appearance | |
|---|---|---|---|---|---|---|
| | Before Immersion in Electrolytic solution [mN/mm] | After Immersion in Electrolytic Solution [mN/mm] | Retention Rate [%] | Discharge Capacity Retention Rate [%] | Number of Coating Streaks | Number of Aggregates |
| Example 1 | 28 | 29 | 104 | 95.9 | 0 | 0 |
| Example 2 | 25 | 26 | 104 | 95.8 | 0 | 0 |
| Example 3 | 23 | 24 | 104 | 94.2 | 0 | 0 |
| Example 4 | 20 | 30 | 150 | 95.2 | 0 | 0 |
| Example 5 | 28 | 29 | 104 | 95.9 | 0 | 0 |
| Example 6 | 38 | 20 | 53 | 94.8 | 0 | 0 |
| Example 7 | 20 | 22 | 110 | 94.0 | 0 | 0 |
| Example 8 | 28 | 29 | 104 | 96.1 | 0 | 0 |
| Example 9 | 27 | 28 | 104 | 96.0 | 0 | 0 |
| Comparative Example 1 | 28 | 37 | 133 | 95.3 | 2 | 1 |
| Comparative Example 2 | 13 | 13 | 100 | 89.3 | 0 | 3 |
| Comparative Example 3 | 15 | 7 | 47 | 90.0 | 0 | 3 |
| Comparative Example 4 | 35 | 10 | 29 | 90.3 | 0 | 0 |
| Comparative Example 5 | 18 | 5 | 28 | 90.2 | 0 | 0 |
| Comparative Example 6 | 15 | 12 | 80 | 91.5 | 0 | 1 |
| Comparative Example 7 | Separation after polymerization (not measurable) | | | | | |

### <Evaluation Results>

As shown in Table 2, in Examples 1 to 9, as compared with Comparative Examples 1 to 7, electrodes having an excellent negative electrode appearance and excellent peel strength of the negative electrode active material layer were produced. Further, in Examples 1 to 9, batteries having an excellent discharge capacity retention rate, including an electrode having an excellent negative electrode appearance and excellent peel strength of the negative electrode active material layer, were produced. That is, by using a binder polymer including a first structural unit represented by Formula (1) in an amount of from 12% by mol to 68% by mol, a second structural unit represented by Formula (2) in an amount of from 12% by mol to 87% by mol, and a third structural unit represented by Formula (3) in an amount of from 1.0% by mol to 60% by mol, it was shown that electrodes having an excellent appearance and high peel strength of the electrode active material layer even after immersion in the electrolytic solution can be produced, and that non-aqueous secondary batteries having an excellent discharge capacity retention rate, including electrodes having an excellent appearance and excellent peel strength of the electrode active material layer, can also be produced.

The present disclosure of Japanese Patent Application No. 2023-223502 is incorporated herein by reference in its entirety. All documents, patent applications, and technical standards described in the present specification are incorporated herein by reference to the same extent as if each individual document, patent application, and technical standard was specifically and individually indicated to be incorporated by reference.

## Claims

1. An electrode binder polymer for a non-aqueous secondary battery, comprising:
a first structural unit represented by the following Formula (1) in an amount of from 12% by mol to 68% by mol;
a second structural unit represented by the following Formula (2) in an amount of from 12% by mol to 87% by mol; and
a third structural unit represented by the following Formula (3) in an amount of from 1.0% by mol to 60% by mol:
Formula (1): -CH₂CR¹(CONR²R³)-
wherein, in Formula (1), R¹ is a hydrogen atom or an alkyl group; R² has a hydroxy group, and has a structure containing two or more carbon atoms between the nitrogen atom to which R² and R³ are bonded and the hydroxy group contained in R²; R³ is a hydrogen atom, a hydrocarbon group, or a structure in which at least one of hydrogen atoms of a hydrocarbon group is substituted with a hydroxy group, or a structure having a hydroxy group and containing two or more carbon atoms between the nitrogen atom to which R² and R³ are bonded and the hydroxy group contained in R³:
Formula (2): -CH₂CR⁴(COOX)-
wherein, in Formula (2), R⁴ is a hydrogen atom or an alkyl group; and COOX is at least one selected from the group consisting of a carboxy group and salts thereof: and
Formula (3): -CH₂CR⁵(C≡N)-
wherein, in Formula (3), R⁵ is a hydrogen atom, an alkyl group, or an alkoxy group.

2. The electrode binder polymer for a non-aqueous secondary battery according to claim 1, wherein a solubility in water at 25°C is 5.0 g/100 gH₂O or more.

3. The electrode binder polymer for a non-aqueous secondary battery according to claim 1, wherein a total content of the first structural unit, the second structural unit, and the third structural unit is 80% by mol or more.

4. The electrode binder polymer for a non-aqueous secondary battery according to claim 1, wherein R² is a structure represented by R²¹-OH, and R²¹ is a hydrocarbon group or a structure in which at least one of hydrogen atoms of a hydrocarbon group is substituted with a hydroxy group.

5. The electrode binder polymer for a non-aqueous secondary battery according to claim 1, wherein, in the second structural unit, a content of a structural unit in which COOX in the formula is a sodium salt of a carboxy group is 20% by mol or more.

6. The electrode binder polymer for a non-aqueous secondary battery according to claim 1, wherein a content of the second structural unit is 70% by mol or less.

7. The electrode binder polymer for a non-aqueous secondary battery according to claim 1, wherein a weight average molecular weight is from 1,500,000 to 10,000,000.

8. The electrode binder polymer for a non-aqueous secondary battery according to claim 1, further comprising a fourth structural unit represented by the following Formula (4):
Formula (4): -CH₂CR⁶(NR⁷COR⁸)-
wherein, in Formula (4), R⁶ is a hydrogen atom or an alkyl group, R⁷ is a hydrogen atom or a hydrocarbon group, and R⁸ is a hydrogen atom or a hydrocarbon group.

9. An electrode binder composition for a non-aqueous secondary battery, comprising:
the electrode binder polymer for a non-aqueous secondary battery according to any one of claims 1 to 8; and
an aqueous medium.

10. The electrode binder composition for a non-aqueous secondary battery according to claim 9, wherein the electrode binder polymer for a non-aqueous secondary battery is entirely dissolved in the aqueous medium at 25°C.

11. An electrode slurry for a non-aqueous secondary battery, comprising:
the electrode binder polymer for a non-aqueous secondary battery according to any one of claims 1 to 8;
an electrode active material; and
an aqueous medium.

12. An electrode for a non-aqueous secondary battery, comprising:
a current collector; and
an electrode active material layer provided on or above at least a part of a region on a surface of the current collector and comprising an electrode active material and the electrode binder polymer for a non-aqueous secondary battery according to any one of claims 1 to 8.

13. A non-aqueous secondary battery comprising the electrode for a non-aqueous secondary battery according to claim 12.

14. A method of producing the electrode binder polymer for a non-aqueous secondary battery according to any one of claims 1 to 8, the method comprising:
performing radical polymerization in an aqueous medium using N-hydroxyethyl (meth)acrylamide or N-hydroxypropyl (meth)acrylamide as a compound from which the first structural unit is derived, at least one selected from the group consisting of (meth)acrylic acid and a salt thereof as a compound from which the second structural unit is derived, and (meth)acrylonitrile as a compound from which the third structural unit is derived.

15. A method of producing an electrode binder composition for a non-aqueous secondary battery, the method comprising mixing the electrode binder polymer for a non-aqueous secondary battery according to any one of claims 1 to 8 and an aqueous medium.

16. A method of producing an electrode slurry for a non-aqueous secondary battery, the method comprising mixing the electrode binder polymer for a non-aqueous secondary battery according to any one of claims 1 to 8, an electrode active material with an aqueous medium.

17. A method of producing an electrode for a non-aqueous secondary battery, comprising:
applying the electrode slurry for a non-aqueous secondary battery according to claim 11 to at least a portion of a surface of a current collector; and drying thereof.
